Europäisches Patentamt

European Patent Office

Office européen des brevets

(19)

(11) Veröffentlichungsnummer: **0 355 547**
**A1**

## (12) EUROPÄISCHE PATENTANMELDUNG

(21) Anmeldenummer: 89114535.1

(22) Anmeldetag: 07.08.89

(51) Int. Cl.⁴: **C08L 77/00**

(30) Priorität: 09.08.88 DE 3826950

(43) Veröffentlichungstag der Anmeldung:
28.02.90 Patentblatt 90/09

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Lohrbaecher, Volker**
**Kisslichstrasse 1**
**D-6940 Weinheim(DE)**
Erfinder: **Pellkofer, Erich**
**Mozartstrasse 4**
**D-6704 Mutterstadt(DE)**

(54) **Polyamid-Formmassen.**

(57) Polyamid-Formmassen mit hoher Wärmeformbeständigkeit für die Herstellung von Blasformteilen enthalten im wesentlichen zwei hochviskose Polyamide, die miteinander homogen mischbar sind und die eine Differenz der Schmelztemperatur von 10 bis 50 °C aufweisen. Der Anteil des Polyamids mit niedriger Schmelztemperatur beträgt 5 bis 40 Gew.%, der mit hoher Schmelztemperatur beträgt 60 bis 95 Gew.-%.

EP 0 355 547 A1

## Polyamid-Formmassen

Hohlkörper aus Polyamiden lassen sich auf einfache Weise durch Blasformen herstellen. Dazu werden mittels eines Extruders und eines Schlauchkopfes kontinuierlich oder diskontinuierlich schlauchförmige Vorformlinge extrudiert und zwischen einer zweiteiligen Blasform ausgetragen. Beim Schließen der Blasform mittels einer Schließeinheit wird der Vorformling bis auf die Stelle der Einblasöffnung durch die an der Blasform befindlichen Quetschzonen durch Quetschnähte oben und unten verschlossen. Nach dem Schließen der Blasform wird der in der Formhöhlung befindliche Teil des Vorformlings mit einem Druckgas bis zur Anlage an die Formwand gedehnt und an der Formwand abgekühlt. Nach dem Abkühlen wird die Blasform geöffnet und der Hohlkörper entnommen.

Für das Blasformen eignen sich nur Polyamide, die eine sehr hohe Viskosität in der Schmelze haben. Üblicherweise werden hochmolekulare Polyamide verwendet, deren Viskositätszahl nach DIN 53727 (Schwefelsäure) mindestens 150 insbesondere mindestens 200 beträgt. Niedrig schmelzende Polyamide, wie Polyamid 6, besitzen zwar einen ausreichend breiten Temperaturbereich, in dem die Verarbeitung möglich ist, die Hohlkörper weisen jedoch eine unbefriedigende Wärmeformbeständigkeit auf. Hochschmelzende Polyamide, wie Polyamid 6,6 zeichnen sich zwar durch eine hohe Wärmeformbeständigkeit aus, der Verarbeitungstemperaturbereich ist jedoch so eng, daß der Verformling infolge Auslängung in der Form nicht mehr zu einwandfreien Hohlkörpern verarbeitet werden kann.

Es bestand daher die Aufgabe, Polyamid-Formmassen für das Blasformen bereit zu stellen, die sich durch hohe Wärmeformbeständigkeit und einen breiten Verarbeitungstemperaturbereich auszeichnen.

Darüber hinaus bestand die Aufgabe, technische Teile aus Polyamid durch Blasformen herzustellen, die sich durch hohe Steifigkeit, hohe Festigkeit und geringen Verzug auszeichnen. Es war zwar bekannt, durch Zusatz von verstärkenden Füllstoffen, wie Glasfasern, die Festigkeitseigenschaften von Polyamiden zu verbessern. Glasfaserverstärkte Polyamide konnten jedoch bislang nicht durch Blasformen verarbeitet werden.

Überraschenderweise wurde nun gefunden, daß Polyamid-Formmassen die aus einem Gemisch von zwei hochviskosen Polyamiden mit unterschiedlichen Schmelztemperaturen bestehen, diese Bedingungen erfüllen. Sie lassen sich sogar dann noch durch Blasformen verarbeiten, wenn sie verstärkende Füllstoffe enthalten. Sie sind geeignet für die Herstellung von Blasformteilen mit einer Länge von bis zu 1,20 m und einem Volumen von bis zu 10 l.

Gegenstand der Erfindung sind Polyamid-Formmassen mit verbesserten Verarbeitungseigenschaften für die Herstellung von Blasformteilen bestehend im wesentlichen aus zwei verschiedenen Polyamiden mit hoher für das Blasformen geeigneter Schmelzenviskosität, die in der Schmelze miteinander homogen mischbar sind und die eine Differenz der Schmelztemperaturen von 10 bis 50°C aufweisen, wobei der Anteil des Polyamids (a) mit der niedrigen Schmelztemperatur 5 bis 40 Gew.% und der Anteil des Polyamids (b) mit der höheren Schmelztemperatur 60 bis 95 Gew.% beträgt.

Die neuen Formmassen bestehen aus einem Gemisch von zwei verschiedenen Polyamiden, die miteinander homogen mischbar sind. Alle bekannten Polyamide sind als Ausgangsstoffe geeignet, die eine für das Blasformen ausreichend hohe Schmelzenviskosität aufweisen. Dies ist dann der Fall, wenn ihre Viskositätszahl nach DIN 53727 (Schwefelsäure) mindestens 150, vorzugsweise 180 bis 500 insbesondere 200 bis 400 beträgt.

Beispiele sind Polyhexamethylenadipinsäureamid (Nylon 6,6), Polyhexamethylenazelainsäureamid (Nylon 6,9), Polyhexamethylensebacinsäureamid (Nylon 6,10) Polyhexamethylendodekandisäureamid (Nylon 6,12), die durch Ringöffnung von Lactamen erhaltenen Polyamide, wie Polycaprolactam, Polylaurinsäurelactam, ferner Poly-11-aminoundekansäureamid und Bis-(p-aminocyclohexyl)-methandodekandisäureamid.

Auch Polyamide auf Basis von Terephthalsäure oder Isophthalsäure als Säurekomponente, oder von Trimethylhexamethylendiamin oder Bis-(p-aminocyclohexyl)-propan als Diaminkomponente können verwendet werden. Geeignet sind auch Polyamidgrundharze, die durch Copolymerisation zweier der vorgenannten Polymeren oder durch Terpolymerisation der vorgenannten Polymeren oder ihrer Komponenten hergestellt worden sind, z.B. das Copolymere aus Adipinsäure, Isophthalsäure und Hexamethylendiamin.

Vorzugsweise sind die Polyamide linear und haben Schmelzpunkte von mehr als 170°C, insbesondere mehr als 200°C, sie können aber auch verzweigt oder vernetzt sein. Die beiden Polyamidkomponenten sollen eine Differenz der Schmelztemperatur von 10 bis 50°C, vorzugsweise 20 bis 40°C aufweisen, wobei der Anteil des Polyamids (a) mit der niedrigen Schmelztemperatur 5 bis 40 Gew.% vorzugsweise 20 bis 30 Gew.% und der Anteil des Polyamids (b) mit der höheren Schmelztemperatur 60 bis 95 Gew.%, vorzugsweise 70 bis 80 Gew.% beträgt.

Geeignet sind beispielsweise Mischungen aus Polyamid 6 (Schmelzpunkt ca. 220°C) oder Polyamid 6,10 (Schmelzpunkt ca. 215°C) mit Polyamid 6,6 (Schmelzpunkt ca. 255°C). Mischungen aus Polyamid 6 (Polycaprolactam) mit einer Viskositätszahl (Schwefelsäure) von mindestens 280 und Polyamid 6,6 (Polyhexamethylenadipinamid) mit einer Viskositätszahl (Schwefelsäure) von mindestens 200 werden bevorzugt verwendet.

Die mechanischen Eigenschaften der aus den Formmassen hergestellten Hohlkörper können durch Zusatz feinteiliger verstärkender Füllstoffe verbessert werden.

Geeignete Füllstoffe sind beispielsweise Talkum, Glimmer, vorzugsweise Wollastonit, Asbest, Kohlenstoff-Fasern und insbesondere Glasfasern.

Die verstärkenden Füllstoffe werden in Mengen bis zu 55 Gew.%, vorzugsweise von 10 bis 50 Gew.% bezogen auf die Polyamide, verwendet. Die Glasfasern werden im allgemeinen mit einer mittleren Faserlänge von 50 bis 1.000, insbesondere 50 bis 300 μm und einem Durchmesser von 5 bis 20 μm verwendet.

Die Formmassen können ferner übliche Zusatzstoffe in wirksamen Mengen enthalten, wie Farbstoffe, Pigmente, Gleitmittel, Flammschutzmittel und/oder Stabilisatoren. Die Formmassen können aus einer innigen Mischung all ihrer Komponenten bestehen, die durch Vermischen in der Schmelze in einer geeigneten Mischvorrichtung, z.B. einem Extruder hergestellt wird. Die Formmasse kann aber auch als grobe Mischung der Einzelkomponenten vorliegen, die erst unmittelbar bei der Weiterverarbeitung im Extruder in der Schmelze homogenisiert werden. Die unverstärkten Formmassen gemäß der Erfindung weisen im allgemeinen als Polyamidmischung einen Volumenfließindex MVI (nach DIN 53 735, Teil 10, Verfahren B; Düse L : D = 8 : 2,1 mm; F = 5 kp; 280°C) von 2 bis 20, insbesondere 3 bis 15 cm$^3$/10 min auf. Bei den verstärkten Formmassen liegt der MVI im allgemeinen zwischen 1 und 20, vorzugsweise 2,5 bis 15 cm$^3$/10 min.

Beispiele 1 bis 4

Mittels eines Extruders mit Schlauchkopf wurden kontinuierlich Vorformlinge extrudiert und in einer Blasform zu Flaschen von 25 g Gewicht und 310 cm$^3$ Volumen aufgeblasen. Als Polyamid (a) wurde verzweigtes Polycaprolactam mit einem Schmelzpunkt von ca. 220°C verwendet, viskositätszahl (Schwefelsäure) 320 (Ultramid® 94 der BASF Aktiengesellschaft). Als Polyamid (b) wurde unverzweigtes Polyhexamethylenadipinsäureamid verwendet mit einem Schmelzpunkt von ca. 225°C, Viskositätszahl (Schwefelsäure) 270 (Ultramid® A5 der BASF Aktiengesellschaft). Die Zusammenfassung der Formmassen und die Ergebnisse sind der Tabelle 1 zu entnehmen.

Beispiele 5 bis 11

Es wurde entsprechend den Beispielen 1 bis 4 gearbeitet. Dazu wurden Flaschen von 310 cm$^3$ Volumen mit unterschiedlicher Wanddicke hergestellt. Als Ausgangsstoffe wurden verwendet:

(a) verzweigtes Polycaprolactam, Schmelzpunkt ca. 220°C, Viskositätszahl (Schwefelsäure) 320 (Ultramid® 94 der BASF Aktiengesellschaft)

(b) glasfaserverstärktes Polyhexamethylenadipinsäureamid, Schmelzpunkt ca. 255°C, Viskositätszahl (Schwefelsäure) 250, Glasfasergehalt 25 Gew.%, mittl. Glasfaserlänge 250 μm, Durchmesser 10 μm (Ultramid® 84/5 der BASF Aktiengesellschaft).

Die Ergebnisse sind in Tabelle 2 zusammengefaßt.

Tabelle 1

| Beispiel | Gew.% Polyamid (a) | Gew.% Polyamid (b) | Verarbeitungstemperaturbereich (°C) | Wärmeformbeständig ISO 75 (°C) | | Berstdruck (bar) | MVI 280°C, 5 kp 8 : 2,1 (cm³/10 min) | Zugfestigkeit DIN 53455 [N/mm²] | Dehnung DIN 53455 [%] |
|---|---|---|---|---|---|---|---|---|---|
| | | | | Verf. A | Verf. B | | | | |
| 1 (Vergleich) | 100 | - | 235-280 | 40 | 140 | 16 | 5.4 | 83 | 280 |
| 2 | 5 | 95 | 265-280 | 90 | >200 | 15 | 8.9 | 65 | 180 |
| 3 | 20 | 80 | 265-280 | 80 | >200 | 14 | 6,8 | 75 | 250 |
| 4 (Vergleich) | - | 100 | 265-270 | 100 | >200 | *) | 9.2 | - | - |

*) infolge des engen Verarbeitungstemperaturbereichs konnten keine einwandfreien Hohlkörper hergestellt werden

EP 0 355 547 A1

Tabelle 2

| Beispiel | Gew.% (a) | Gew.% (b) | Glasfasern Gew.%, bezogen auf Polyamid | Verarbeitungs-temperaberei-ch (°C) | Wärmeformbeständigkeit (°C) ISO 75 | | mittl. Wanddicke (mm) | Berstdruck (bar) | MVI 280°C, 5 kp 8 : 2,1 (cm³/10 min) | Zugfestigkeit DIN 53455 [N/mm²] | | Dehnung DIN 53455 [%] |
|---|---|---|---|---|---|---|---|---|---|---|---|---|
| | | | | | Verf. A | Verf. B | | | | längs | quer | |
| 5 | 10 | 90 | 29 | 235-280 | 240 | 250 | 0,65 | 7 | 15,1 | 66 | 33 | 8 |
| 6 | 20 | 80 | 25 | 230-280 | 230 | 240 | 0,65 | 14 | 11,4 | 66 | 45 | 10 |
| 7 | 30 | 70 | 21 | 235-280 | 220 | 230 | 0;65 | 16 | 9,3 | 69 | 50 | 12 |
| 8 | 20 | 80 | 25 | 235-280 | 230 | 240 | 0,9 | 17 | 11,1 | 66 | 45 | 10 |
| 9 | 30 | 70 | 21 | 235-280 | 220 | 230 | 0,9 | 18 | 10,3 | 69 | 50 | 12 |
| 10 | 30 | 70 | 21 | 235-280 | 220 | 230 | 1,3 | 25 | 10,2 | 69 | 50 | 12 |
| 11 | 40 | 60 | 15 | 235-280 | 200 | 230 | 1,3 | 27 | 8,3 | 72 | 55 | 12 |

**Ansprüche**

1. Polyamid-Formmassen mit hoher Wärmeformbeständigkeit für die Herstellung von Blasformteilen bestehend im wesentlichen aus zwei verschiedenen Polyamiden mit hoher für das Blasformen geeigneter Schmelzenviskosität, die in der Schmelze miteinander homogen mischbar sind und die eine Differenz der Schmelztemperaturen von 10 bis 50°C aufweisen, wobei der Anteil des Polyamids (a) fit der niedrigen Schmelztemperatur 5 bis 40 Gew.% und der Anteil des Polyamids (b) mit der höheren Schmelztemperatur 60 bis 95 Gew.% beträgt.

2. Polyamid-Formmassen nach Anspruch 1, in denen die Komponente (a) Polycaprolactam mit einer Viskositätszahl nach DIN 53727 (Schwefelsäure) von mindestens 280 und die Komponente (b) Polyhexamethylenadipinamid mit einer Viskositätszahl nach DIN 53 727 (Schwefelsäure) von mindestens 200 ist.

3. Polyamid-Formmassen nach einem der Ansprüche 1 oder 2, in denen die Polyamidmischung einen Volumen-Fließindex MVI (nach DIN 53 735, Teil 10, Verfahren B; Düse L : D = 8 : 2,1 mm; F = 5 kp; 280°C) von 2 bis 20 cm$^3$/10 min aufweist.

4. Polyamid-Formmassen nach einem der Ansprüche 1 bis 3, in denen bis zu 55 Gew.%, bezogen auf die Polyamidmischung, verstärkende Füllstoffe enthalten sind.

5. Polyamid-Formmassen nach einem der Ansprüche 1 bis 4, in denen bis zu 55 Gew.%, bezogen auf die Polyamidmischung, Glasfasern mit einer mittleren Faserlänge von 50 bis 1 000 μm und einem Durchmesser von 5 bis 20 μ enthalten sind.

6. Polyamid-Formmassen nach den Ansprüchen 4 bis 5, die einen Volumen-Fließindex MVI (nach DIN 53 735, Teil 10, Verfahren B, Düse L : D = 8 : 2,1 mm, F = 5 kp; 280°C) von 1 bis 20 cm$^3$/10 min aufweisen.

Europäisches
Patentamt

**EUROPÄISCHER RECHERCHENBERICHT**

Nummer der Anmeldung

EP 89 11 4535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 556 696 (STEWART et al.)<br>* Ansprüche 1-10; Seite 2, Zeilen 57-64 *<br>--- | 1,2,4,5 | C 08 L 77/00 |
| A | EP-A-0 192 264 (EMS-INVENTA AG)<br>* Ansprüche 1-6 *<br>----- | 1-6 | |
| | | | **RECHERCHIERTE SACHGEBIETE (Int. Cl.5)**<br><br>C 08 L |

Der vorliegende Recherchenbericht wurde für alle Patentansprüche erstellt

| Recherchenort | Abschlußdatum der Recherche | Prüfer |
|---|---|---|
| DEN HAAG | 23-10-1989 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
··············································································
& : Mitglied der gleichen Patentfamilie, übereinstimmendes Dokument

EPO FORM 1503 03.82 (P0403)